# EUROPEAN PATENT APPLICATION

(11) **EP 4 492 519 A1**
(43) Date of publication of application: **15.01.2025**
(21) Application number: 24187842.0
(22) Date of filing: 10.07.2024
(51) Int. Cl.: H01M 10/04, H01M 10/0587, H01M 50/538, H01M 50/178, H01M 50/55, H01M 10/0525

(54) **ELECTROCHEMICAL DEVICE AND ELECTRICAL DEVICE**

(30) Priority: 10.07.2023 CN 202310835526
(71) Applicant: Ningde Amperex Technology Ltd., Ningde City, Fujian 352100 (CN)
(72) Inventor: HUANG, Liujun, Ningde City, Fujian Province, 352100 (CN)
(74) Representative: Icosa

(57) **Abstract**

This application discloses an electrochemical device (100) and an electrical device. The electrochemical device (100) includes a housing (10), an electrode assembly (20), a first tab (31), a second tab (32), and a third tab (41). The first tab (31) and the second tab (32) are connected to the first electrode plate (21), and partially protrude out of the housing (10). A protruding part of the second tab (32) out of the housing (10) is connected to a protruding part of the first tab (31) out of the housing (10). Along a first direction (X), a projection of the protruding part of the first tab (31) out of the housing (10) overlaps a projection of the protruding part of the second tab (32) out of the housing (10). By starting from a first leading end (211), the first tab (31) is connected to the first electrode plate (21) at a 10% to 60% point of a total length of the first electrode plate (21), and the second tab (32) is connected to the first electrode plate (21) at a 60% to 100% point of the total length of the first electrode plate (21), thereby shortening the charging or discharging time of the electrochemical device (100), reducing the temperature increment in a charging or discharging process, improving the bending resistance of the first tab (31) and the second tab (32), reducing the risk of breakage of the first tab (31) and/or the second tab (32), and improving the shock resistance of the electrochemical device (100).

## Description

### TECHNICAL FIELD

This application relates to the technical field of energy storage, and in particular, to an electrochemical device and an electrical device.

### BACKGROUND

Currently, with the wide application of fast-charge batteries, the charge rate performance of batteries is increasingly valued, and major manufacturers have gradually focused on shortening the charging time and improving user experience. In addition, charging a battery at a high C-rate intensifies the temperature increment and even leads to a risk of spontaneous combustion.

### SUMMARY

In view of the above situation, it is necessary to provide an electrochemical device to shorten the charging or discharging time and reduce the temperature increment in a charging or discharging process.

An embodiment of this application provides an electrochemical device. The electrochemical device includes a housing, an electrode assembly, a first tab, a second tab, and a third tab. The electrode assembly is disposed in the housing. The electrode assembly includes a first electrode plate, a second electrode plate, and a separator. The separator is disposed between the first electrode plate and the second electrode plate. The first electrode plate, the separator, and the second electrode plate are wound together. The first tab is connected to the first electrode plate, and partially protrudes out of the housing. The second tab is connected to the first electrode plate, and partially protrudes out of the housing. A protruding part of the second tab out of the housing is connected to a protruding part of the first tab out of the housing. The third tab is connected to the second electrode plate, and partially protrudes out of the housing. Along a first direction, a projection of a protruding part of the first tab out of the housing overlaps a projection of a protruding part of the second tab out of the housing. The first direction is a thickness direction of the electrode assembly. Along a winding direction of the electrode assembly, the first electrode plate includes a first leading end and a first trailing end. By starting from the first leading end, the first tab is connected to the first electrode plate at a 10% to 60% point of a total length of the first electrode plate, and the second tab is connected to the first electrode plate at a 60% to 100% point of the total length of the first electrode plate. The projection of the protruding part of the first tab out of the housing partially or completely overlaps the projection of the protruding part of the second tab out of the housing.

In the above electrochemical device, the first tab and the second tab are set to be of the same polarity, the first tab is connected to the first electrode plate at a 10% to 60% point of the total length of the first electrode plate, and the second tab is connected to the first electrode plate at a 60% to 100% point of the total length of the first electrode plate, thereby shortening the charging or discharging time of the electrochemical device, and reducing the temperature increment in a charging or discharging process. In addition, the protruding part of the second tab out of the housing is connected to the protruding part of the first tab out of the housing, and the projection of the protruding part of the first tab out of the housing overlaps the projection of the protruding part of the second tab out of the housing along the first direction, so that the first tab and the second tab support each other to reinforce each other, thereby improving the bending resistance of the first tab and the second tab, reducing the risk of breakage of the first tab and/or the second tab, and improving the shock resistance of the electrochemical device.

In some embodiments of this application, by starting from the first leading end, the first tab is connected to the first electrode plate at a 25% to 50% point of the total length of the first electrode plate, and/or, the second tab is connected to the first electrode plate at a 70% to 90% point of the total length of the first electrode plate, thereby further shortening the charging or discharging time of the electrochemical device, and reducing the temperature increment in a charging or discharging process.

In some embodiments of this application, the first electrode plate is a positive electrode plate, the first tab and the second tab are positive tabs, the second electrode plate is a negative electrode plate, and the third tab is a negative tab. The positive tab is less structurally strong and less rigid than the negative tab. The first tab and the second tab of the same positive polarity are connected to support each other and reinforce each other, thereby improving the bending resistance of the positive tab, reducing the risk of breakage of the positive tab, and improving the shock resistance of the electrochemical device.

In some embodiments of this application, the first electrode plate is a negative electrode plate, the first tab and the second tab are negative tabs, the second electrode plate is a positive electrode plate, and the third tab is a positive tab. The first tab and the second tab of the same negative polarity are connected to support each other and reinforce each other, thereby improving the bending resistance of the negative tab, reducing the risk of breakage of the negative tab, and improving the shock resistance of the electrochemical device.

In some embodiments of this application, a thickness of the first tab is d1, satisfying: 40 µm ≤ d1 ≤ 150 µm; and/or, a thickness of the second tab is d2, satisfying: 40 µm ≤ d2 ≤ 150 µm.

In some embodiments of this application, the electrochemical device further includes a first bonding piece. At least a part of the first bonding piece is located between the first tab and the housing, and connects the first tab to the housing. Along a second direction perpendicular to the first direction, the first bonding piece extends beyond two opposite sides of the first tab. By setting the first bonding piece to bond the first tab to the housing, this application favorably seals the gap between the housing and the first tab, reduces the risk of leakage of substances out of the housing or entry of external substances into the housing, improves the safety performance of the electrochemical device, and also favorably constrains and fixes the first tab, improves the stability of the first tab connected to the housing, and improves the shock resistance of the electrochemical device.

In some embodiments of this application, the electrochemical device further includes a second bonding piece. At least a part of the second bonding piece is located between the second tab and the housing, and connects the second tab to the housing. Along a second direction, the second bonding piece extends beyond two opposite sides of the second tab. By setting the second bonding piece to bond the second tab to the housing, this application favorably seals the gap between the housing and the second tab, reduces the risk of leakage of substances out of the housing or entry of external substances into the housing, improves the safety performance of the electrochemical device, and also favorably constrains and fixes the second tab, improves the stability of the second tab connected to the housing, and improves the shock resistance of the electrochemical device.

In some embodiments of this application, the electrochemical device further includes a third bonding piece. At least a part of the third bonding piece is located between the third tab and the housing, and connects the third tab to the housing. Along the second direction, a part of the third bonding piece extends beyond two opposite sides of the third tab. By setting the third bonding piece to bond the third tab to the housing, this application favorably seals the gap between the housing and the third tab, reduces the risk of leakage of substances out of the housing or entry of external substances into the housing, improves the safety performance of the electrochemical device, and also favorably constrains and fixes the third tab, improves the stability of the third tab connected to the housing, and improves the shock resistance of the electrochemical device.

In some embodiments of this application, along the first direction, a thickness of the first bonding piece is d3, satisfying: 40 µm ≤ d3 ≤ 200 µm, thereby reducing the impact caused by the first bonding piece onto the space and increasing the energy density of the electrochemical device on the premise of ensuring sufficient bonding strength of the first bonding piece.

In some embodiments of this application, along the first direction, a thickness of the second bonding piece is d4, satisfying: 40 µm ≤ d4 ≤ 200 µm, thereby reducing the impact caused by the second bonding piece onto the space and increasing the energy density of the electrochemical device on the premise of ensuring sufficient bonding strength of the second bonding piece.

In some embodiments of this application, along the first direction, a thickness of the third bonding piece is d5, satisfying: 40 µm ≤ d5 ≤ 200 µm, thereby reducing the impact caused by the third bonding piece onto the space and increasing the energy density of the electrochemical device on the premise of ensuring sufficient bonding strength of the third bonding piece.

In some embodiments of this application, the electrochemical device further includes a fourth bonding piece. At least a part of the fourth bonding piece is located between the first tab and the second tab, and connects the first tab and the second tab. By means of the fourth bonding piece, the first tab and the second tab are bonded to each other to form a whole, thereby improving the stability of connection between the first tab and the second tab, improving the bending resistance of the first tab and the second tab, and improving the shock resistance of the electrochemical device.

In some embodiments of this application, the fourth bonding piece is double-sided tape, thereby improving the efficiency of the fourth bonding piece in bonding the first tab and the second tab, and improving assembling efficiency.

In some embodiments of this application, the first tab includes a first part. Along the first direction, a projection of the first part does not overlap a projection of the second tab, and the projection of the first part and the projection of the second tab are arranged along the second direction. The second direction is perpendicular to the first direction. A length of the first part along the second direction is d6, satisfying: d6 ≤ 0.2 mm.

In some embodiments of this application, the first electrode plate includes a first current collector and a first active layer. The first active layer is disposed on a surface of the first current collector. A first recess is created on the first electrode plate. A bottom of the first recess is the first current collector. A periphery of the first recess is the first active layer. At least a part of the first tab is disposed in the first recess and connected to the first current collector, thereby reducing the impact caused by the first tab onto the thickness of the electrode assembly, and increasing the energy density of the electrochemical device.

In some embodiments of this application, a second recess is created on the first electrode plate. A bottom of the second recess is the first current collector. A periphery of the second recess is the first active layer. At least a part of the second tab is disposed in the second recess and connected to the first current collector, thereby reducing the impact caused by the second tab onto the thickness of the electrode assembly, and increasing the energy density of the electrochemical device.

In some embodiments of this application, the first current collector includes a first coated region, a first blank foil region, and a second blank foil region. At least a part of the first blank foil region is located at the first leading end. At least a part of the second blank foil region is located at the first trailing end. The first active layer is disposed in the first coated region. The first blank foil region is exposed without the first active layer. The second blank foil region is exposed without the first active layer.

The first tab is connected to the first blank foil region, thereby shortening the charging or discharging time of the electrochemical device and reducing the temperature increment in a charging or discharging process.

In some embodiments of this application, the first tab is connected to the first coated region, thereby shortening the charging or discharging time of the electrochemical device and reducing the temperature increment in a charging or discharging process. In some embodiments of this application, the second tab is connected to the second blank foil region, thereby shortening the charging or discharging time of the electrochemical device and reducing the temperature increment in a charging or discharging process.

In some embodiments of this application, the second tab is connected to the first coated region, thereby shortening the charging or discharging time of the electrochemical device and reducing the temperature increment in a charging or discharging process. In some embodiments of this application, the first coated region includes a first single-side-coated region, a second single-side-coated region, and a first double-side-coated region. The first double-side-coated region is connected to the first single-side-coated region and the second single-side-coated region. The first single-side-coated region is connected to the first blank foil region. The second single-side-coated region is connected to the second blank foil region. Along a thickness direction of the first electrode plate, one side of the first single-side-coated region is coated with the first active layer, one side of the second single-side-coated region is coated with the first active layer, and both sides of the first double-side-coated region are coated with the first active layer. The first tab is connected to the first single-side-coated region or the first double-side-coated region, thereby shortening the charging or discharging time of the electrochemical device and reducing the temperature increment in a charging or discharging process.

In some embodiments of this application, the second tab is connected to the second single-side-coated region or the first double-side-coated region, thereby shortening the charging or discharging time of the electrochemical device and reducing the temperature increment in a charging or discharging process.

In some embodiments of this application, the electrochemical device further includes a fourth tab. The fourth tab is connected to the second electrode plate and partially protrudes out of the housing. A protruding part of the fourth tab out of the housing is connected to a protruding part of the third tab out of the housing. Along the first direction, a projection of the protruding part of the third tab out of the housing overlaps a projection of the protruding part of the fourth tab out of the housing. Along the winding direction of the electrode assembly, the second electrode plate includes a second leading end and a second trailing end. By starting from the second leading end, the third tab is connected to the second electrode plate at a 10% to 60% point of a total length of the second electrode plate, and the fourth tab is connected to the second electrode plate at a 60% to 100% point of the total length of the second electrode plate. With the fourth tab disposed additionally, the third tab is connected to the second electrode plate at a 10% to 60% point of the total length of the second electrode plate, and the fourth tab is connected to the second electrode plate at a 60% to 100% point of the total length of the second electrode plate, thereby shortening the charging or discharging time of the electrochemical device, and reducing the temperature increment in a charging or discharging process. In addition, the protruding part of the fourth tab out of the housing is connected to the protruding part of the third tab out of the housing, and the projection of the protruding part of the third tab out of the housing overlaps the projection of the protruding part of the fourth tab out of the housing along the first direction, so that the third tab and the fourth tab support each other to reinforce each other, thereby improving the bending resistance of the third tab and the fourth tab, reducing the risk of breakage of the third tab and/or the fourth tab, and improving the shock resistance of the electrochemical device.

In some embodiments of this application, by starting from the second leading end, the third tab is connected to the second electrode plate at a 25% to 50% point of the total length of the second electrode plate, and/or, the fourth tab is connected to the second electrode plate at a 70% to 90% point of the total length of the second electrode plate, thereby shortening the charging or discharging time of the electrochemical device, and reducing the temperature increment in a charging or discharging process.

In some embodiments of this application, the electrochemical device further includes a fifth bonding piece. At least a part of the fifth bonding piece is located between the fourth tab and the housing, and connects the fourth tab to the housing. Along the second direction perpendicular to the first direction, the fifth bonding piece extends beyond the two opposite sides of the fourth tab. By setting the fifth bonding piece to bond the fourth tab to the housing, this application favorably seals the gap between the housing and the fourth tab, reduces the risk of leakage of substances out of the housing or entry of external substances into the housing, improves the safety performance of the electrochemical device, and also favorably constrains and fixes the fourth tab, improves the stability of the fourth tab connected to the housing, and improves the shock resistance of the electrochemical device.

In some embodiments of this application, along the first direction, a thickness of the fifth bonding piece is d8, satisfying: 40 µm ≤ d8 ≤ 200 µm, thereby reducing the impact caused by the fifth bonding piece onto the space and increasing the energy density of the electrochemical device on the premise of ensuring sufficient bonding strength of the fifth bonding piece.

In some embodiments of this application, the electrochemical device further includes a sixth bonding piece. At least a part of the sixth bonding piece is located between the third tab and the fourth tab, and connects the third tab and the fourth tab. By means of the sixth bonding piece, the third tab and the fourth tab are bonded to each other to form a whole, thereby improving the stability of connection between the third tab and the fourth tab, improving the bending resistance of the third tab and the fourth tab, and improving the shock resistance of the electrochemical device.

In some embodiments of this application, the sixth bonding piece is double-sided tape, thereby improving the efficiency of the sixth bonding piece in bonding the third tab and the fourth tab, and improving assembling efficiency.

In some embodiments of this application, the third tab includes a third part. Along the first direction, a projection of the third part does not overlap a projection of the fourth tab, and the projection of the third part and the projection of the fourth tab are arranged along the second direction perpendicular to the first direction. A length of the third part along the second direction is d9, satisfying: d9 ≤ 0.2 mm.

In some embodiments of this application, the second electrode plate includes a second current collector and a second active layer. The second active layer is disposed on a surface of the second current collector. A third recess is created on the second electrode plate. A bottom of the third recess is the second current collector. A periphery of the third recess is the second active layer. A least a part of the third tab is disposed in the third recess and connected to the second current collector, thereby reducing the impact caused by the third tab onto the thickness of the electrode assembly, and increasing the energy density of the electrochemical device.

In some embodiments of this application, a fourth recess is created on the second electrode plate. A bottom of the fourth recess is the second current collector. A periphery of the fourth recess is the second active layer. At least a part of the fourth tab is disposed in the fourth recess and connected to the second current collector, thereby reducing the impact caused by the fourth tab onto the thickness of the electrode assembly, and increasing the energy density of the electrochemical device.

In some embodiments of this application, the second current collector includes a second coated region, a third blank foil region, and a fourth blank foil region. At least a part of the third blank foil region is located at the second leading end. At least a part of the fourth blank foil region is located at the second trailing end. The second active layer is disposed in the second coated region. The third blank foil region is exposed without the second active layer. The fourth blank foil region is exposed without the second active layer.

In some embodiments of this application, the third tab is connected to the third blank foil region, thereby shortening the charging or discharging time of the electrochemical device and reducing the temperature increment in a charging or discharging process. In some embodiments of this application, the fourth tab is connected to the fourth blank foil region, thereby shortening the charging or discharging time of the electrochemical device and reducing the temperature increment in a charging or discharging process. In some embodiments of this application, the second coated region includes a third single-side-coated region, a fourth single-side-coated region, and a second double-side-coated region. The second double-side-coated region is connected to the third single-side-coated region and the fourth single-side-coated region. The third single-side-coated region is connected to the third blank foil region. The fourth single-side-coated region is connected to the fourth blank foil region. Along a thickness direction of the second electrode plate, one side of the third single-side-coated region is coated with the second active layer, one side of the fourth single-side-coated region is coated with the second active layer, and both sides of the second double-side-coated region are coated with the second active layer. The third tab is connected to the third single-side-coated region or the second double-side-coated region, thereby shortening the charging or discharging time of the electrochemical device and reducing the temperature increment in a charging or discharging process.

In some embodiments of this application, the fourth tab is connected to the fourth single-side-coated region or the second double-side-coated region, thereby shortening the charging or discharging time of the electrochemical device and reducing the temperature increment in a charging or discharging process.

An embodiment of this application further provides an electrical device. The electrical device includes the electrochemical device disclosed in any one of the preceding embodiments.

In the above electrical device, the first tab and the second tab of the same polarity are disposed in the electrochemical device, the first tab is connected to the first electrode plate at a 10% to 60% point of the total length of the first electrode plate, and the second tab is connected to the first electrode plate at a 60% to 100% point of the total length of the first electrode plate, thereby shortening the charging or discharging time of the electrochemical device, reducing the temperature increment in a charging or discharging process, and reducing the impact caused by the charging or discharging time and the temperature increment of the electrochemical device onto the electrical device. In addition, the protruding part of the second tab out of the housing is connected to the protruding part of the first tab out of the housing, and the projection of the protruding part of the first tab out of the housing overlaps the projection of the protruding part of the second tab out of the housing along the first direction, so that the first tab and the second tab support each other to reinforce each other, thereby improving the bending resistance of the first tab and the second tab, reducing the risk of breakage of the first tab and/or the second tab, improving the shock resistance of the electrochemical device, and reducing the impact caused by the wobbling of the electrochemical device onto the electrical device.

### BRIEF DESCRIPTION OF DRAWINGS

FIG. 1 is a schematic structural diagram of an electrochemical device according to an embodiment of this application;
FIG. 2 is a structural view of a part of an electrochemical device viewed along a first direction according to an embodiment of this application;
FIG. 3 is a structural view of a part of an electrochemical device viewed along a third direction according to an embodiment of this application;
FIG. 4 is a close-up view of a region A shown in FIG. 3;
FIG. 5 is a close-up view of a region B shown in FIG. 3;
FIG. 6 is a close-up view of a region C shown in FIG. 3;
FIG. 7 is a structural view of a part of a first tab and a second tab connected by a fourth bonding piece and viewed along a second direction according to an embodiment of this application;
FIG. 8 is a structural view of a part of an electrochemical device viewed along a third direction according to an embodiment of this application;
FIG. 9 is a close-up view of a region D shown in FIG. 8;
FIG. 10 is a close-up view of a region E shown in FIG. 8;
FIG. 11 is a structural view of a part of an electrochemical device viewed along a third direction according to an embodiment of this application;
FIG. 12 is a close-up view of a region F shown in FIG. 11;
FIG. 13 is a close-up view of a region G shown in FIG. 11;
FIG. 14 is a structural view of a part of an electrochemical device viewed along a third direction according to an embodiment of this application;
FIG. 15 is a close-up view of a region I shown in FIG. 14;
FIG. 16 is a structural view of a part of an electrochemical device viewed along a first direction according to an embodiment of this application;
FIG. 17 is a structural view of a part of an electrochemical device viewed along a third direction according to an embodiment of this application;
FIG. 18 is a close-up view of a region J shown in FIG. 17;
FIG. 19 is a close-up view of a region K shown in FIG. 17;
FIG. 20 is a close-up view of a region L shown in FIG. 17;
FIG. 21 is a close-up view of a region M shown in FIG. 17;
FIG. 22 is a structural view of a part of a third tab and a fourth tab connected by a sixth bonding piece and viewed along a second direction according to an embodiment of this application;
FIG. 23 is a structural view of a part of an electrochemical device viewed along a third direction according to an embodiment of this application;
FIG. 24 is a close-up view of a region N shown in FIG. 23;
FIG. 25 is a close-up view of a region O shown in FIG. 23;
FIG. 26 is a close-up view of a region P shown in FIG. 23;
FIG. 27 is a structural view of a part of an electrochemical device viewed along a third direction according to an embodiment of this application;
FIG. 28 is a close-up view of a region Q shown in FIG. 27;
FIG. 29 is a close-up view of a region R shown in FIG. 27;
FIG. 30 is a close-up view of a region S shown in FIG. 27;
FIG. 31 is a structural view of a part of an electrochemical device viewed along a third direction according to an embodiment of this application;
FIG. 32 is a close-up view of a region T shown in FIG. 31;
FIG. 33 is a close-up view of a region X shown in FIG. 31; and
FIG. 34 is a schematic structural diagram of an electrical device according to an embodiment of this application.

This application is further described below with reference to the following specific embodiments and the foregoing drawings.

### DETAILED DESCRIPTION OF EMBODIMENTS

The following describes the technical solutions in the embodiments of this application with reference to the drawings hereto. Evidently, the described embodiments are merely a part of but not all of the embodiments of this application.

It is hereby noted that a component considered to be "connected to" another component may be directly connected to the other component or may be connected to the other component through an intermediate component. The term "and/or" used herein includes any and all combinations of one or more relevant items enumerated.

Unless otherwise defined, all technical and scientific terms used herein bear the same meanings as what is normally understood by a person skilled in the technical field of this application. The terms used in the specification of this application are merely intended to describe specific embodiments but not to limit this application. The terms "include" and "contain" and any variations thereof used in the specification, claims, and brief description of drawings of this application are intended to cover a non-exclusive inclusion.

In the description of some embodiments of this application, the technical terms "first" and "second" are merely intended to distinguish between different items but not intended to indicate or imply relative importance or implicitly specify the number of the indicated technical features, specific order, or order of precedence. In the description of some embodiments of this application, unless otherwise expressly specified, "a plurality of" means two or more.

Reference to an "embodiment" herein means that a specific feature, structure or characteristic described with reference to this embodiment may be included in at least one embodiment of this application. Reference to this term in different places in the specification does not necessarily represent the same embodiment, nor does it represent an independent or alternative embodiment in a mutually exclusive relationship with other embodiments. To the extent that no conflict occurs, different embodiments of this application may be combined with each other.

It is hereby noted that, dimensions such as thickness, length, and width of various components in some embodiments of this application shown in the drawings, and dimensions such as overall thickness, length, and width of an integrated device are merely illustrative descriptions, but do not constitute any limitation on this application. An embodiment of this application provides an electrochemical device. The electrochemical device includes a housing, an electrode assembly, a first tab, a second tab, and a third tab. The electrode assembly is disposed in the housing. The electrode assembly includes a first electrode plate, a second electrode plate, and a separator. The separator is disposed between the first electrode plate and the second electrode plate. The first electrode plate, the separator, and the second electrode plate are wound together. The first tab is connected to the first electrode plate, and partially protrudes out of the housing. The second tab is connected to the first electrode plate, and partially protrudes out of the housing. A protruding part of the second tab out of the housing is connected to a protruding part of the first tab out of the housing. The third tab is connected to the second electrode plate, and partially protrudes out of the housing. Along a first direction, a projection of a protruding part of the first tab out of the housing overlaps a projection of a protruding part of the second tab out of the housing. The first direction is a thickness direction of the electrode assembly. Along a winding direction of the electrode assembly, the first electrode plate includes a first leading end and a first trailing end. By starting from the first leading end, the first tab is connected to the first electrode plate at a 10% to 60% point of a total length of the first electrode plate, and the second tab is connected to the first electrode plate at a 60% to 100% point of the total length of the first electrode plate.

In the above electrochemical device, the first tab and the second tab are set to be of the same polarity, the first tab is connected to the first electrode plate at a 10% to 60% point of the total length of the first electrode plate, and the second tab is connected to the first electrode plate at a 60% to 100% point of the total length of the first electrode plate, thereby shortening the charging or discharging time of the electrochemical device, and reducing the temperature increment in a charging or discharging process. In addition, the protruding part of the second tab out of the housing is connected to the protruding part of the first tab out of the housing, and the projection of the protruding part of the first tab out of the housing overlaps the projection of the protruding part of the second tab out of the housing along the first direction, so that the first tab and the second tab support each other to reinforce each other, thereby improving the bending resistance of the first tab and the second tab, reducing the risk of breakage of the first tab and/or the second tab, and improving the shock resistance of the electrochemical device.

The following further describes the embodiments of this application with reference to drawings.

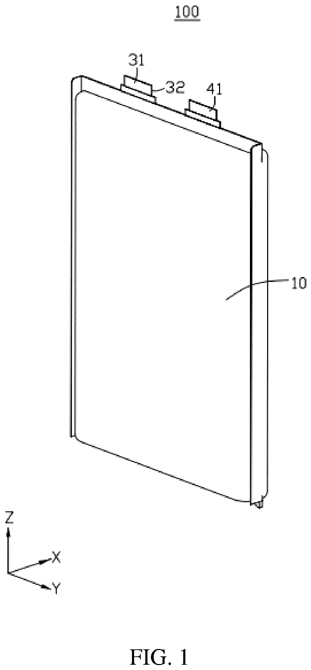

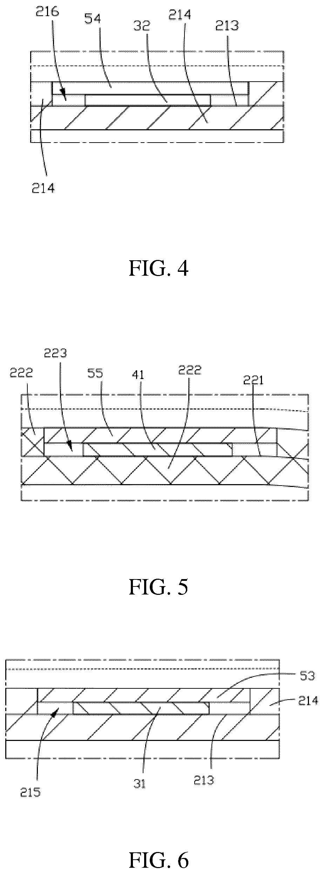

As shown in FIG. 1 to FIG. 6, an embodiment of this application provides an electrochemical device 100. The electrochemical device includes a housing 10, an electrode assembly 20, a first tab 31, a second tab 32, and a third tab 41. The electrode assembly 20 is disposed in the housing 10. The electrode assembly 20 includes a first electrode plate 21, a second electrode plate 22, and a separator 23. The separator 23 is disposed between the first electrode plate 21 and the second electrode plate 22. The first electrode plate 21, the separator 23, and the second electrode plate 22 are wound together.

The first tab 31 is connected to the first electrode plate 21, and partially protrudes out of the housing 10. The second tab 32 is connected to the first electrode plate 21, and partially protrudes out of the housing 10. A protruding part of the second tab 32 out of the housing 10 is connected to a protruding part of the first tab 31 out of the housing 10. Along a first direction X, a projection of a protruding part of the first tab 31 out of the housing 10 overlaps a projection of a protruding part of the second tab 32 out of the housing 10. The first direction X is a thickness direction of the electrode assembly 20. Along a winding direction of the electrode assembly 20, the first electrode plate 21 includes a first leading end 211 and a first trailing end 212. By starting from the first leading end 211, the first tab 31 is connected to the first electrode plate at a 10% to 60% point of a total length of the first electrode plate 21, and the second tab 32 is connected to the first electrode plate at a 60% to 100% point of the total length of the first electrode plate 21. The first leading end 211 is located at a winding center of the electrode assembly 20. The first trailing end 212 is located at the end of an outermost coil of the electrode assembly 20, the outermost coil being away from the winding center.

The third tab 41 is connected to the second electrode plate 22, and partially protrudes out of the housing 10.

In the above electrochemical device 100, the first tab 31 and the second tab 32 are set to be of the same polarity, the first tab 31 is connected to the first electrode plate at a 10% to 60% point of the total length of the first electrode plate 21, and the second tab 32 is connected to the first electrode plate at a 60% to 100% point of the total length of the first electrode plate 21, thereby shortening the charging or discharging time of the electrochemical device 100, and reducing the temperature increment in a charging or discharging process. In addition, the protruding part of the second tab 32 out of the housing 10 is connected to the protruding part of the first tab 31 out of the housing 10, and the projection of the protruding part of the first tab 31 out of the housing 10 overlaps the projection of the protruding part of the second tab 32 out of the housing 10 along the first direction X, so that the first tab 31 and the second tab 32 support each other to reinforce each other, thereby improving the bending resistance of the first tab 31 and the second tab 32, reducing the risk of breakage of the first tab 31 and/or the second tab 32, and improving the shock resistance of the electrochemical device 100.

In an embodiment, the first electrode plate is a positive electrode plate, the first tab and the second tab are positive tabs, the second electrode plate is a negative electrode plate, and the third tab is a negative tab. The positive tab is less structurally strong and less rigid than the negative tab. The first tab and the second tab of the same positive polarity are connected to support each other and reinforce each other, thereby improving the bending resistance of the positive tab, reducing the risk of breakage of the positive tab, and improving the shock resistance of the electrochemical device.

In an embodiment, the first electrode plate is a negative electrode plate, the first tab and the second tab are negative tabs, the second electrode plate is a positive electrode plate, and the third tab is a positive tab. The first tab and the second tab of the same negative polarity are connected to support each other and reinforce each other, thereby improving the bending resistance of the negative tab, reducing the risk of breakage of the negative tab, and improving the shock resistance of the electrochemical device.

In an example to be described below in more detail, the first electrode plate is a positive electrode plate, the first tab and the second tab are positive tabs, the second electrode plate is a negative electrode plate, and the third tab is a negative tab.

In an embodiment, the first tab 31 and the second tab 32 are made of aluminum metal. Due to inherent properties of aluminum, the first tab 31 and the second tab 32 are scarcely resistant to bending and are prone to bend or break. When the protruding part of the first tab 31 out of the housing 10 is connected to the protruding part of the second tab 32 out of the housing 10, and the projection of the protruding part of the first tab out of the housing overlaps the projection of the protruding part of the second tab out of the housing along the first direction X, the first tab 31 and the second tab 32 overlap and support each other, thereby improving the bending resistance of the first tab 31 and the second tab 32, reducing the risk of bending or breakage of the first tab 31 and/or the second tab 32, and improving the shock resistance of the electrochemical device 100.

In an embodiment, the third tab 41 is made of nickel metal or a copper nickel alloy.

In an embodiment, by starting from the first leading end 211, the first tab 31 is connected to the first electrode plate at a 25% to 50% point of the total length of the first electrode plate 21, thereby shortening the charging or discharging time of the electrochemical device 100, and reducing the temperature increment in a charging or discharging process.

In an embodiment, by starting from the first leading end 211, the first tab 31 is connected to the first electrode plate 21 at an a% point of the total length of the first electrode plate 21, where the value of a is any one of 10, 15, 20, 25, 30, 35, 40, 45, 50, 55, or 60, thereby shortening the charging or discharging time of the electrochemical device 100, and reducing the temperature increment in a charging or discharging process.

In an embodiment, the second tab 32 is connected to the first electrode plate at a 70% to 90% point of the total length of the first electrode plate 21, thereby further shortening the charging or discharging time of the electrochemical device 100 and reducing the temperature increment in a charging or discharging process.

In an embodiment, the second tab 32 is connected to the first electrode plate 21 at a b% point of the total length of the first electrode plate 21, where the value of a is any one of 60, 65, 70, 75, 80, 85, 90, 95, or 100, thereby shortening the charging or discharging time of the electrochemical device 100, and reducing the temperature increment in a charging or discharging process.

In an embodiment, the thickness of the first tab 31 is d1, satisfying: 40 µm ≤ d1 ≤ 150 µm, thereby reducing the impact caused by the first tab 31 onto the thickness of the electrode assembly 20 on the premise of ensuring a sufficient flow capacity of the first tab 31.

In an embodiment, the thickness d1 of the first tab 31 is any one of 45 µm, 50 µm, 55 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 145 µm, or 150 µm.

In an embodiment, the thickness of the second tab 32 is d2, satisfying: 40 µm ≤ d2 ≤ 150 µm, thereby reducing the impact caused by the second tab 32 onto the thickness of the electrode assembly 20 on the premise of ensuring a sufficient flow capacity of the second tab 32.

In an embodiment, the thickness d2 of the second tab 32 is any one of 40 µm, 45 µm, 50 µm, 55 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 145 µm, or 150 µm.

In an embodiment, along a third direction Z perpendicular to the first direction X, the first tab 31, the second tab 32, and the third tab 41 are located on the same side of the housing 10. In other embodiments, along the third direction Z, the first tab 31 and the second tab 32 are located on the same side of the housing 10, and the third tab 41 is located on an opposite side of the housing 10 (not shown in the drawing).

In an example to be described below in more detail, the first tab 31, the second tab 32, and the third tab 41 are located on the same side of the housing 10 along the third direction Z.

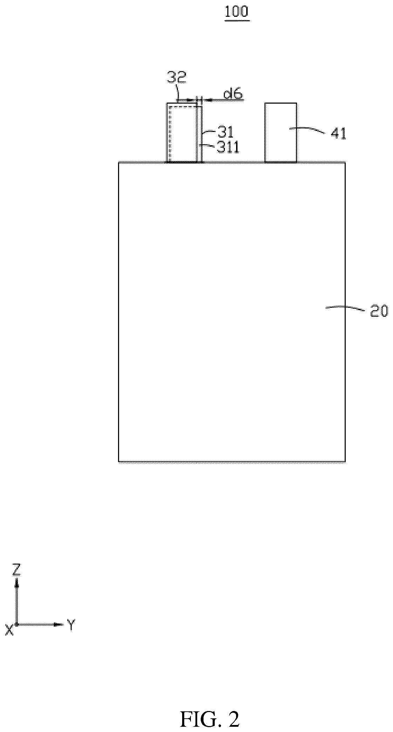

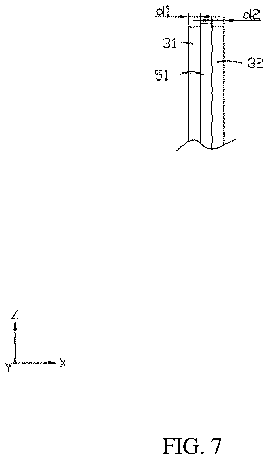

As shown in FIG. 2 and FIG. 7, in an embodiment, the electrochemical device 100 further includes a fourth bonding piece 51. At least a part of the fourth bonding piece 51 is located between the first tab 31 and the second tab 32, and connects the first tab 31 and the second tab 32. By means of the fourth bonding piece 51, the first tab 31 and the second tab 32 are bonded to each other to form a whole, thereby improving the stability of connection between the first tab 31 and the second tab 32, further improving the bending resistance of the first tab 31 and the second tab 32, and improving the shock resistance of the electrochemical device 100.

In an embodiment, the fourth bonding piece 51 is double-sided tape, thereby making it convenient to bond the first tab 31 and the second tab 32 together, and improving the assembling efficiency of the electrochemical device 100.

In an embodiment, the fourth bonding piece 51 is formed between the first tab 31 and the second tab 32 by being melted and then solidified, thereby improving the stability of connection between the first tab 31 and the second tab 32.

In an embodiment, the first tab 31 includes a first part 311. Along the first direction X, a projection of the first part 311 does not overlap a projection of the second tab 32. The projection of the first part 311 and the projection of the second tab 32 are arranged along the second direction Y. A length of the first part 311 along the second direction Y is d6, satisfying: d6 ≤ 0.2 mm. The second direction Y is perpendicular to both the first direction X and the third direction Z.

In an embodiment, the value of d6 is any one of 0 mm, 0.02 mm, 0.04 mm, 0.06 mm, 0.08 mm, 0.1 mm, 0.12 mm, 0.14 mm, 0.16 mm, 0.18 mm, or 0.2 mm.

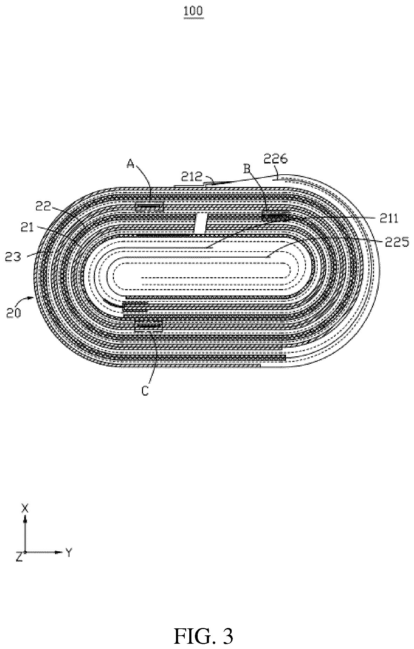

In an embodiment, d6 is 0 mm. In this case, along the second direction Y, the edge of the first tab 31 is flush with the edge of the second tab 32 (not shown in the drawing). As shown in FIG. 3 to FIG. 6, in an embodiment, the first electrode plate 21 includes a first current collector 213 and a first active layer 214. The first active layer 214 is disposed on a surface of the first current collector 213.

In an embodiment, a first recess 215 is created on the first electrode plate 21. A bottom of the first recess 215 is the first current collector 213. A periphery of the first recess 215 is the first active layer 214. At least a part of the first tab 31 is disposed in the first recess 215 and connected to the first current collector 213, thereby reducing the impact caused by the first tab 31 onto the thickness of the electrode assembly 20, and increasing the energy density of the electrochemical device 100.

In an embodiment, a second recess 216 is created on the first electrode plate 21. A bottom of the second recess 216 is the first current collector 213. A periphery of the second recess 216 is the first active layer 214. At least a part of the second tab 32 is disposed in the second recess 216 and connected to the first current collector 213, thereby reducing the impact caused by the second tab 32 onto the thickness of the electrode assembly 20, and increasing the energy density of the electrochemical device 100.

In an embodiment, the first tab 31 is welded to the first current collector 213 at the bottom of the first recess 215, so that the first tab 31 is connected to the first electrode plate 21. In an embodiment, the second tab 32 is welded to the first current collector 213 at the bottom of the second recess 216, so that the second tab 32 is connected to the first electrode plate 21.

In an embodiment, the electrochemical device 100 further includes a seventh bonding piece 53. At least a part of the seventh bonding piece 53 is located in the first recess 215, and bonds the first tab 31 to the first electrode plate 21. By means of the seventh bonding piece 53, the stability and reliability of connection between the first tab 31 and the first electrode plate 21 are improved, thereby reducing the risk of poor contact or detachment between the first tab 31 and the first electrode plate 21, and improving the shock resistance of the electrochemical device 100.

In an embodiment, the entire seventh bonding piece 53 is located in the first recess 215, without extending beyond the first recess 215, thereby reducing the impact caused by the seventh bonding piece 53 onto the thickness of the electrode assembly 20, and increasing the energy density of the electrochemical device 100.

In an embodiment, the seventh bonding piece 53 is adhesive tape.

In an embodiment, the electrochemical device 100 further includes an eighth bonding piece 54. At least a part of the eighth bonding piece 54 is located in the second recess 216, and bonds the second tab 32 to the first electrode plate 21. By means of the eighth bonding piece 54, the stability and reliability of connection between the second tab 32 and the first electrode plate 21 are improved, thereby reducing the risk of poor contact or detachment between the second tab 32 and the first electrode plate 21, and improving the shock resistance of the electrochemical device 100.

In an embodiment, the entire eighth bonding piece 54 is located in the second recess 216, without extending beyond the second recess 216, thereby reducing the impact caused by the eighth bonding piece 54 onto the thickness of the electrode assembly 20, and increasing the energy density of the electrochemical device 100.

In an embodiment, the eighth bonding piece 54 is adhesive tape.

In an embodiment, the second electrode plate 22 includes a second current collector 221 and a second active layer 222. The second active layer 222 is disposed on a surface of the second current collector 221.

A third recess 223 is created on the second electrode plate 22. A bottom of the third recess 223 is the second current collector 221. A periphery of the third recess 223 is the second active layer 222. A least a part of the third tab 41 is disposed in the third recess 223 and connected to the second current collector 221, thereby reducing the impact caused by the third tab 41 onto the thickness of the electrode assembly 20, and increasing the energy density of the electrochemical device 100.

In an embodiment, the third tab 41 is welded to the second current collector 221 at the bottom of the third recess 223, so that the third tab 41 is connected to the second electrode plate 22.

In an embodiment, the electrochemical device 100 further includes a ninth bonding piece 55. At least a part of the ninth bonding piece 55 is located in the third recess 223, and bonds the third tab 41 to the second electrode plate 22. By means of the ninth bonding piece 55, the stability and reliability of connection between the third tab 41 and the second electrode plate 22 are improved, thereby reducing the risk of poor contact or detachment between the third tab 41 and the second electrode plate 22, and improving the shock resistance of the electrochemical device 100.

In an embodiment, the entire ninth bonding piece 55 is located in the third recess 223, without extending beyond the third recess 223, thereby reducing the impact caused by the ninth bonding piece 55 onto the thickness of the electrode assembly 20, and increasing the energy density of the electrochemical device 100.

In an embodiment, the ninth bonding piece 55 is adhesive tape.

In an embodiment, along the winding direction of the electrode assembly 20, the second electrode plate 22 includes a second leading end 225 and a second trailing end 226. By starting from the second leading end 225, the third tab 41 is connected to the second electrode plate at a 10% to 60% point of the total length of the second electrode plate 22, thereby shortening the charging or discharging time of the electrochemical device 100, and reducing the temperature increment in a charging or discharging process. The second leading end 225 is located at the winding center of the electrode assembly 20. The second trailing end 226 is located at the end of an outermost coil of the electrode assembly 20, the outermost coil being away from the winding center.

In an embodiment, by starting from the second leading end 225, the third tab 41 is connected to the second electrode plate at a 25% to 50% point of the total length of the second electrode plate 22, thereby further shortening the charging or discharging time of the electrochemical device 100, and reducing the temperature increment in a charging or discharging process.

In an embodiment, by starting from the second leading end 225, the third tab 41 is connected to the second electrode plate 22 at a c% point of the total length of the second electrode plate 22, where the value of c is any one of 10, 15, 20, 25, 30, 35, 40, 45, 50, 55, or 60, thereby shortening the charging or discharging time of the electrochemical device 100, and reducing the temperature increment in a charging or discharging process.

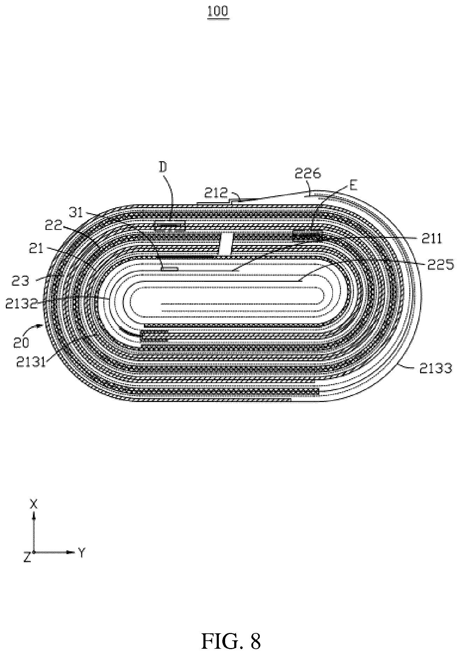

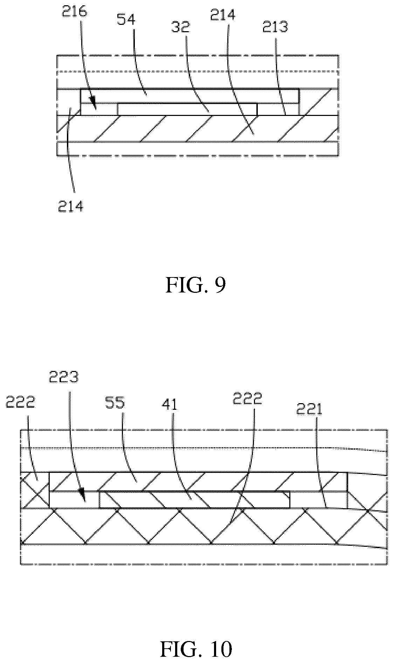

As shown in FIG. 8 to FIG. 10, in an embodiment, the first current collector 213 includes a first coated region 2131, a first blank foil region 2132, and a second blank foil region 2133. At least a part of the first blank foil region 2132 is located at the first leading end 211. At least a part of the second blank foil region 2133 is located at the first trailing end 212. The first active layer 214 is disposed in the first coated region 2131. The first blank foil region 2132 is exposed without the first active layer 214. The second blank foil region 2133 is exposed without the first active layer 214.

In an embodiment, the first tab 31 is connected to the first blank foil region 2132, thereby shortening the charging or discharging time of the electrochemical device 100 and reducing the temperature increment in a charging or discharging process.

In an embodiment, starting from the first leading end 211, the first blank foil region 2132 is located between the first leading end 211 and a 1/60 point of the total length of the first electrode plate 21, thereby reducing the impact caused by the first blank foil region 2132 onto the energy density of the first electrode plate 21.

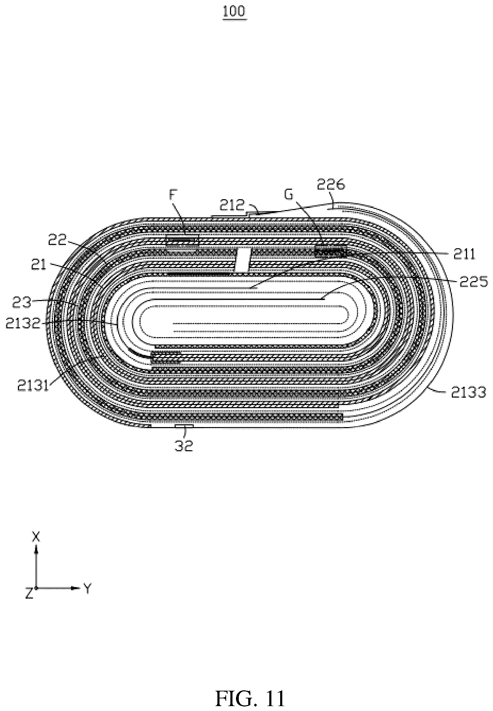

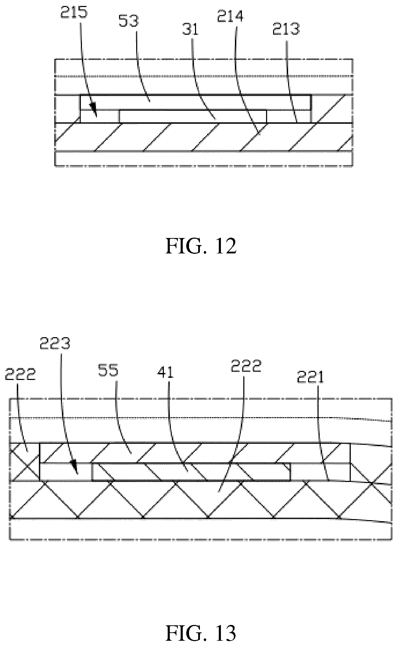

In an embodiment, starting from the first leading end 211, the second blank foil region 2133 is located between a 59/60 point of the total length of the first electrode plate 21 and the first trailing end 212, thereby reducing the impact caused by the second blank foil region 2133 onto the energy density of the first electrode plate 21. As shown in FIG. 11 to FIG. 13, in an embodiment, the second tab 32 is connected to the second blank foil region 2133, thereby shortening the charging or discharging time of the electrochemical device 100 and reducing the temperature increment in a charging or discharging process.

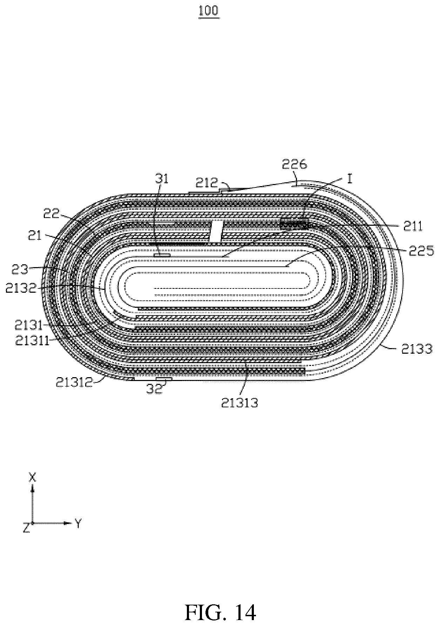

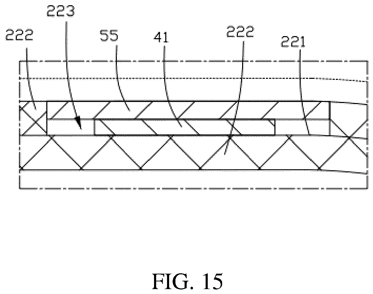

As shown in FIG. 14 and FIG. 15, in an embodiment, the first tab 31 is connected to the first blank foil region 2132, and the second tab 32 is connected to the second blank foil region 2133, thereby shortening the charging or discharging time of the electrochemical device 100 and reducing the temperature increment in a charging or discharging process.

In an embodiment, the first coated region 2131 includes a first single-side-coated region 21311, a second single-side-coated region 21312, and a first double-side-coated region 21313. The first double-side-coated region 21313 is connected to the first single-side-coated region 21311 and the second single-side-coated region 21312. The first single-side-coated region 21311 is close to the winding center of the electrode assembly 20 and connected to the first blank foil region 2132. The second single-side-coated region 21312 is close to the winding trailing end of the electrode assembly 20 and connected to the second blank foil region 2133.

Along a thickness direction of the first electrode plate 21, both sides of the first double-side-coated region 21313 are coated with the first active layer 214. One side of the first single-side-coated region 21311 is coated with the first active layer 214, and the other side of the first single-side-coated region 21311 is not coated with the first active layer 214. One side of the second single-side-coated region 21312 is coated with the first active layer 214, and the other side of the second single-side-coated region 21312 is not coated with the first active layer 214.

In an embodiment, starting from the first leading end 211, the first single-side-coated region 21311 is located between a 1/60 point and a 1/15 point of the total length of the first electrode plate 21, thereby reducing the impact caused by the first single-side-coated region 21311 onto the energy density of the first electrode plate 21, and also reducing the waste of the first active layer 214.

In an embodiment, starting from the first leading end 211, the second single-side-coated region 21312 is located between a 14/15 point and a 59/60 point of the total length of the first electrode plate 21, thereby reducing the impact caused by the second single-side-coated region 21312 onto the energy density of the first electrode plate 21, and also reducing the waste of the first active layer 214.

In an embodiment, the first tab 31 is connected to the first single-side-coated region 21311 (not shown in the drawing), thereby shortening the charging or discharging time of the electrochemical device 100 and reducing the temperature increment in a charging or discharging process.

In an embodiment, the second tab 32 is connected to the second single-side-coated region 21312 (not shown in the drawing), thereby shortening the charging or discharging time of the electrochemical device 100 and reducing the temperature increment in a charging or discharging process.

In an example to be described below in more detail, the first tab 31 is disposed in the first recess 215, and the second tab 32 is disposed in the second recess 216 (as shown in FIG. 3 to FIG. 6).

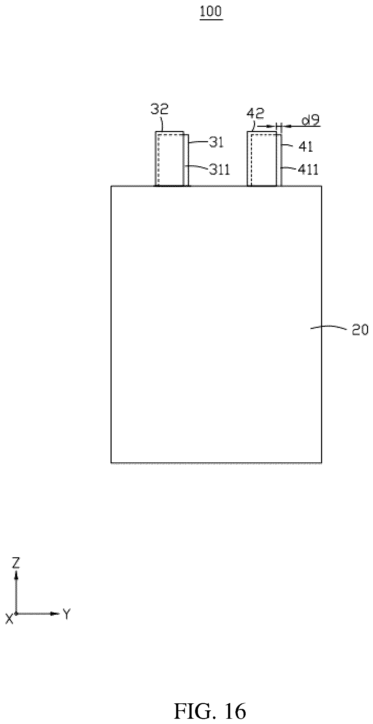

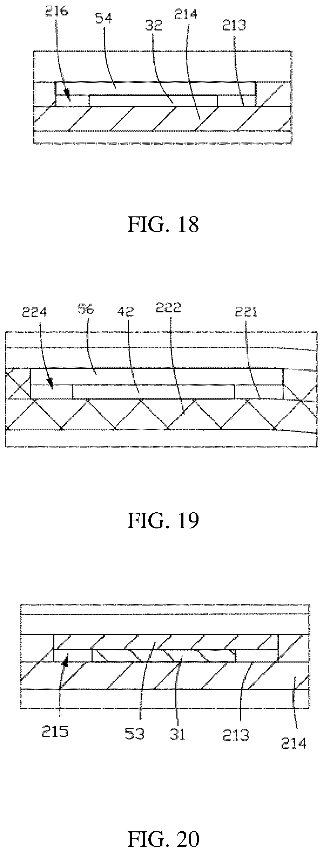

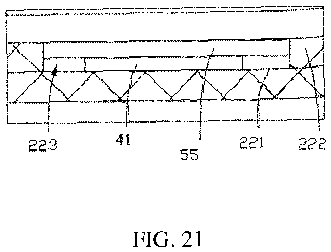

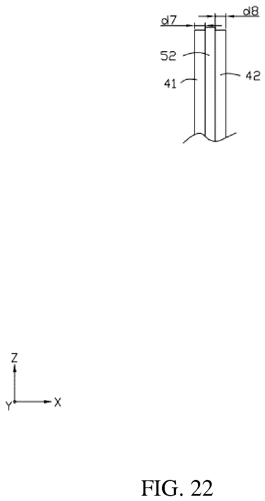

As shown in FIG. 16 to FIG. 22, in an embodiment, the electrochemical device 100 further includes a fourth tab 42. The fourth tab 42 is connected to the second electrode plate 22 and partially protrudes out of the housing 10. A protruding part of the fourth tab 42 out of the housing 10 is connected to a protruding part of the third tab 41 out of the housing 10. Along the first direction X, a projection of the protruding part of the third tab 41 out of the housing 10 overlaps a projection of the protruding part of the fourth tab 42 out of the housing 10. The fourth tab 42 is connected to the second electrode plate at a 60% to 100% point of the total length of the second electrode plate 22.

With the two negative tabs disposed, the fourth tab 42 is connected to the second electrode plate at a 60% to 100% point of the total length of the second electrode plate 22, thereby shortening the charging or discharging time of the electrochemical device 100, and reducing the temperature increment in a charging or discharging process. In addition, the protruding part of the fourth tab 42 out of the housing 10 is connected to the protruding part of the third tab 41 out of the housing 10, and the projection of the protruding part of the third tab 41 out of the housing 10 overlaps the projection of the protruding part of the fourth tab 42 out of the housing 10 along the first direction X, so that the third tab 41 and the fourth tab 42 support each other to reinforce each other, thereby improving the bending resistance of the third tab 41 and the fourth tab 42, reducing the risk of breakage of the third tab 41 and/or the fourth tab 42, and improving the shock resistance of the electrochemical device 100.

In an embodiment, the fourth tab 42 is connected to the second electrode plate at a 70% to 90% point of the total length of the second electrode plate 22, thereby further shortening the charging or discharging time of the electrochemical device 100 and reducing the temperature increment in a charging or discharging process.

In an embodiment, the fourth tab 42 is connected to the second electrode plate 22 at an e% point of the total length of the second electrode plate 22, where the value of e is any one of 60, 65, 70, 75, 80, 85, 90, 95, or 100, thereby shortening the charging or discharging time of the electrochemical device 100, and reducing the temperature increment in a charging or discharging process.

In an embodiment, the thickness of the third tab 41 is d7, satisfying: 40 µm ≤ d7 ≤ 150 µm, thereby reducing the impact caused by the third tab 41 onto the thickness of the electrode assembly 20 on the premise of ensuring a sufficient flow capacity of the third tab 41.

In an embodiment, the thickness d7 of the third tab 41 is any one of 40 µm, 45 µm, 50 µm, 55 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 145 µm, or 150 µm. In an embodiment, the thickness of the fourth tab 42 is d8, satisfying: 40 µm ≤ d8 ≤ 150 µm, thereby reducing the impact caused by the fourth tab 42 onto the thickness of the electrode assembly 20 on the premise of ensuring a sufficient flow capacity of the fourth tab 42.

In an embodiment, the thickness d8 of the fourth tab 42 is any one of 40 µm, 45 µm, 50 µm, 55 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 145 µm, or 150 µm. In an embodiment, the electrochemical device 100 further includes a sixth bonding piece 52. At least a part of the sixth bonding piece 52 is located between the third tab 41 and the fourth tab 42, and connects the third tab 41 and the fourth tab 42. By means of the sixth bonding piece 52, the third tab 41 and the fourth tab 42 are bonded to each other to form a whole, thereby improving the stability of connection between the third tab 41 and the fourth tab 42, further improving the bending resistance of the third tab 41 and the fourth tab 42, and improving the shock resistance of the electrochemical device 100.

In an embodiment, the sixth bonding piece 52 is double-sided tape, thereby making it convenient to bond the third tab 41 and the fourth tab 42 together, and improving the assembling efficiency of the electrochemical device 100.

In an embodiment, the sixth bonding piece 52 is formed between the third tab 41 and the fourth tab 42 by being melted and then solidified, thereby improving the stability of connection between the third tab 41 and the fourth tab 42.

In an embodiment, the third tab 41 includes a third part 411. Along the first direction X, a projection of the third part 411 does not overlap a projection of the fourth tab 42, and the projection of the third part 411 and the projection of the fourth tab 42 are arranged along the second direction Y perpendicular to the first direction X. A length of the third part 411 along the second direction Y is d9, satisfying: d9 ≤ 0.2 mm.

In an embodiment, the value of d9 is any one of 0 mm, 0.02 mm, 0.04 mm, 0.06 mm, 0.08 mm, 0.1 mm, 0.12 mm, 0.14 mm, 0.16 mm, 0.18 mm, or 0.2 mm.

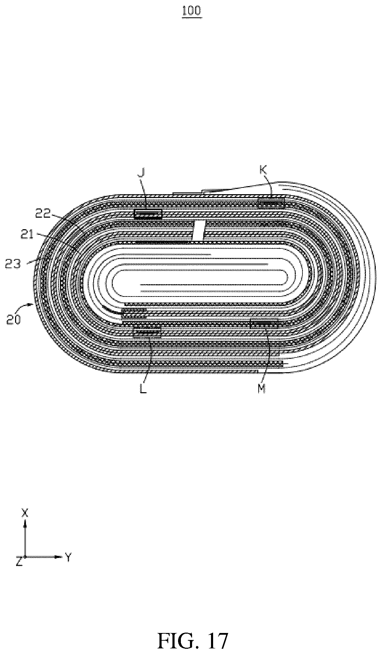

In an embodiment, d9 is 0 mm. In this case, along the second direction Y, the edge of the third tab 41 is flush with the edge of the fourth tab 42 (not shown in the drawing). As shown in FIG. 17 to FIG. 21, in an embodiment, a fourth recess 224 is created on the second electrode plate 22. A bottom of the fourth recess 224 is the second current collector 221. A periphery of the fourth recess 224 is the second active layer 222. A least a part of the fourth tab 42 is disposed in the fourth recess 224 and connected to the second current collector 221, thereby reducing the impact caused by the fourth tab 42 onto the thickness of the electrode assembly 20, and increasing the energy density of the electrochemical device 100.

In an embodiment, the fourth tab 42 is welded to the first current collector 213 at the bottom of the fourth recess 224, so that the fourth tab 42 is connected to the second electrode plate 22.

In an embodiment, the electrochemical device 100 further includes a tenth bonding piece 56. At least a part of the tenth bonding piece 56 is located in the fourth recess 224, and bonds the fourth tab 42 to the second electrode plate 22. By means of the tenth bonding piece 56, the stability and reliability of connection between the fourth tab 42 and the second electrode plate 22 are improved, thereby reducing the risk of poor contact or detachment between the fourth tab 42 and the second electrode plate 22, and improving the shock resistance of the electrochemical device 100.

In an embodiment, the entire tenth bonding piece 56 is located in the fourth recess 224, without extending beyond the fourth recess 224, thereby reducing the impact caused by the tenth bonding piece 56 onto the thickness of the electrode assembly 20, and increasing the energy density of the electrochemical device 100.

In an embodiment, the tenth bonding piece 56 is adhesive tape.

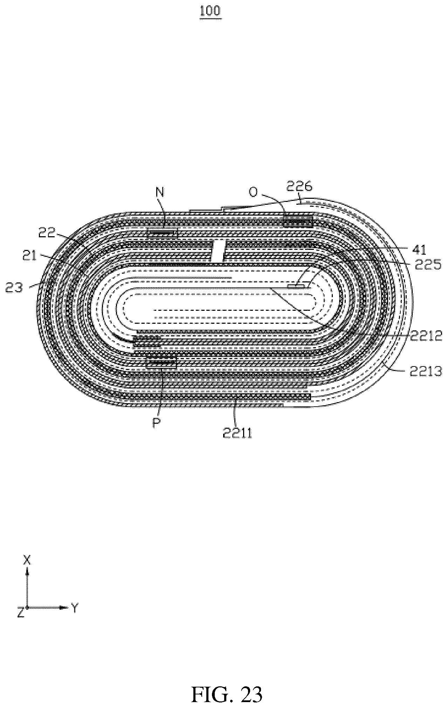

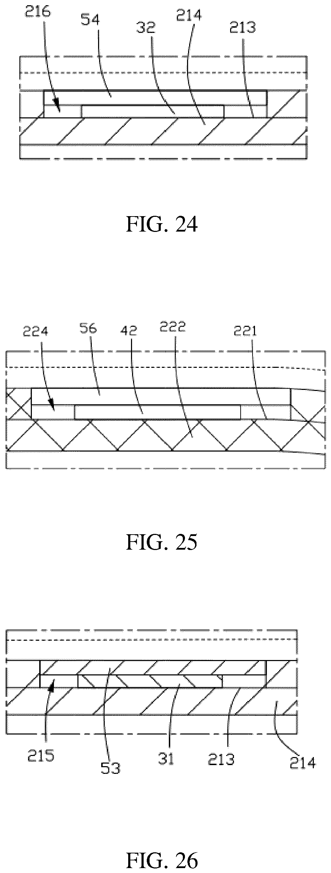

As shown in FIG. 23 to FIG. 26, in an embodiment, the second current collector 221 includes a second coated region 2211, a third blank foil region 2212, and a fourth blank foil region 2213. At least a part of the third blank foil region 2212 is located at the second leading end 225. At least a part of the fourth blank foil region 2213 is located at the second trailing end 226. The second active layer 222 is disposed in the second coated region 2211. The third blank foil region 2212 is exposed without the second active layer 222. The fourth blank foil region 2213 is exposed without the second active layer 222.

In an embodiment, the third tab 41 is connected to the third blank foil region 2212, thereby shortening the charging or discharging time of the electrochemical device 100 and reducing the temperature increment in a charging or discharging process.

In an embodiment, starting from the second leading end 225, the third blank foil region 2212 is located between the second leading end 225 and a 1/60 point of the total length of the second electrode plate 22, thereby reducing the impact caused by the third blank foil region 2212 onto the energy density of the second electrode plate 22.

In an embodiment, starting from the second leading end 225, the fourth blank foil region 2213 is located between a 59/60 point of the total length of the second electrode plate 22 and the second trailing end 226, thereby reducing the impact caused by the fourth blank foil region 2213 onto the energy density of the second electrode plate 22.

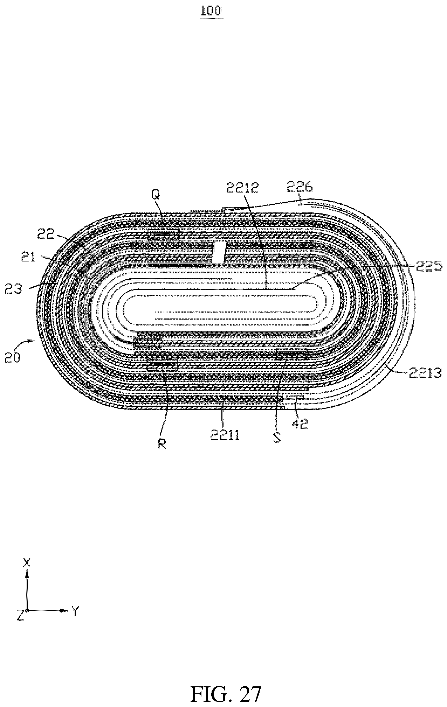

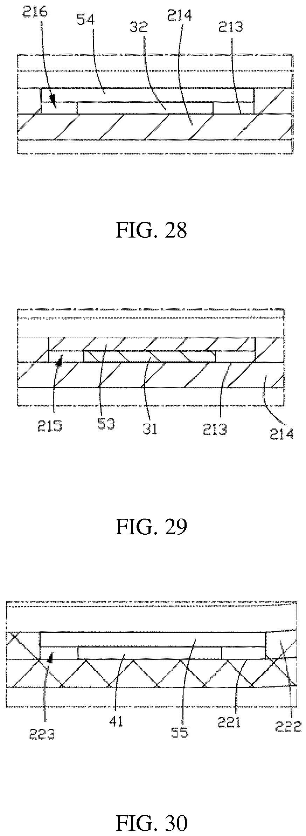

As shown in FIG. 27 to FIG. 30, in an embodiment, the fourth tab 42 is connected to the fourth blank foil region 2213, thereby shortening the charging or discharging time of the electrochemical device 100 and reducing the temperature increment in a charging or discharging process.

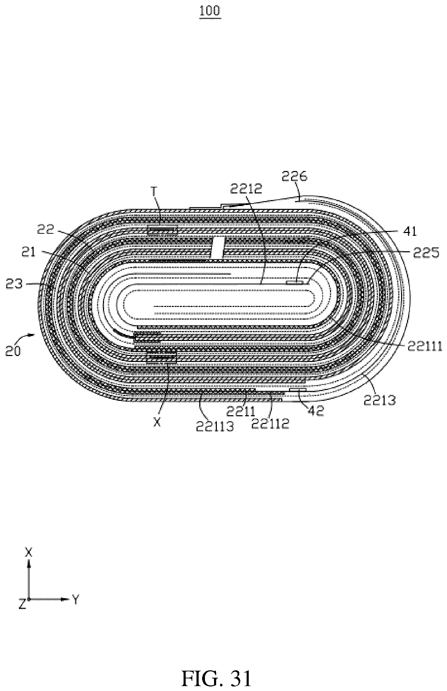

As shown in FIG. 31 to FIG. 33, in an embodiment, the third tab 41 is connected to the third blank foil region 2212, and the fourth tab 42 is connected to the fourth blank foil region 2213, thereby shortening the charging or discharging time of the electrochemical device 100 and reducing the temperature increment in a charging or discharging process. In an embodiment, the second coated region 2211 includes a third single-side-coated region 22111, a fourth single-side-coated region 22112, and a second double-side-coated region 22113. The second double-side-coated region 22113 is connected to the third single-side-coated region 22111 and the fourth single-side-coated region 22112. The third single-side-coated region 22111 is close to the winding center of the electrode assembly 20 and connected to the third blank foil region 2212. The fourth single-side-coated region 22112 is close to the winding trailing end of the electrode assembly 20 and connected to the fourth blank foil region 2213.

Along a thickness direction of the second electrode plate 22, both sides of the second double-side-coated region 22113 are coated with the second active layer 222. One side of the third single-side-coated region 22111 is coated with the second active layer 222, and the other side of the third single-side-coated region 22111 is not coated with the second active layer 222. One side of the fourth single-side-coated region 22112 is coated with the second active layer 222, and the other side of the fourth single-side-coated region 22112 is not coated with the second active layer 222.

In an embodiment, starting from the second leading end 225, the third single-side-coated region 22111 is located between a 1/60 point and a 1/15 point of the total length of the second electrode plate 22, thereby reducing the impact caused by the third single-side-coated region 22111 onto the energy density of the second electrode plate 22, and also reducing the waste of the second active layer 222.

In an embodiment, starting from the second leading end 225, the fourth single-side-coated region 22112 is located between a 14/15 point and a 59/60 point of the total length of the second electrode plate 22, thereby reducing the impact caused by the fourth single-side-coated region 22112 onto the energy density of the second electrode plate 22, and also reducing the waste of the second active layer 222.

In an embodiment, the third tab 41 is connected to the third single-side-coated region 22111 (not shown in the drawing), thereby shortening the charging or discharging time of the electrochemical device 100 and reducing the temperature increment in a charging or discharging process.

In an embodiment, the fourth tab 42 is connected to the fourth single-side-coated region 22112 (not shown in the drawing), thereby shortening the charging or discharging time of the electrochemical device 100 and reducing the temperature increment in a charging or discharging process.

In an embodiment, the electrochemical device 100 further includes a first bonding piece (not shown in the drawing). At least a part of the first bonding piece is located between the first tab 31 and the housing 10, and connects the first tab 31 to the housing 10. Along a second direction Y, the first bonding piece extends beyond two opposite sides of the first tab 31.

By setting the first bonding piece to bond the first tab 31 to the housing 10, this application favorably seals the gap between the housing 10 and the first tab 31, reduces the risk of leakage of substances out of the housing 10 or entry of external substances into the housing 10, improves the safety performance of the electrochemical device 100, and also favorably constrains and fixes the first tab 31, improves the stability of the first tab 31 connected to the housing 10, and improves the shock resistance of the electrochemical device 100.

In an embodiment, along the first direction X, a thickness of the first bonding piece is d3, satisfying: 40 µm ≤ d3 ≤ 200 µm, thereby reducing the impact caused by the first bonding piece onto the space and increasing the energy density of the electrochemical device 100 on the premise of ensuring sufficient bonding strength of the first bonding piece.

In an embodiment, the thickness d3 of the first bonding piece along the first direction X is any one of 40 µm, 45 µm, 50 µm, 55 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 145 µm, or 150 µm, 155 µm, 160 µm, 165 µm, 170 µm, 175 µm, 180 µm, 185 µm, 190 µm, 195 µm, or 200 µm.

In an embodiment, the first bonding piece is an adhesive-sealant.

In an embodiment, the electrochemical device 100 further includes a second bonding piece (not shown in the drawing). At least a part of the second bonding piece is located between the second tab 32 and the housing 10, and connects the second tab 32 to the housing 10.

Along a second direction Y, the second bonding piece extends beyond two opposite sides of the second tab 32.

By setting the second bonding piece to bond the second tab 32 to the housing 10, this application favorably seals the gap between the housing 10 and the second tab 32, reduces the risk of leakage of substances out of the housing 10 or entry of external substances into the housing 10, improves the safety performance of the electrochemical device 100, and also favorably constrains and fixes the second tab 32, improves the stability of the second tab 32 connected to the housing 10, and improves the shock resistance of the electrochemical device 100.

In an embodiment, along the first direction X, a thickness of the second bonding piece is d4, satisfying: 40 µm ≤ d4 ≤ 200 µm, thereby reducing the impact caused by the second bonding piece onto the space and increasing the energy density of the electrochemical device 100 on the premise of ensuring sufficient bonding strength of the second bonding piece.

In an embodiment, the thickness d4 of the second bonding piece along the first direction X is any one of 40 µm, 45 µm, 50 µm, 55 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 145 µm, or 150 µm, 155 µm, 160 µm, 165 µm, 170 µm, 175 µm, 180 µm, 185 µm, 190 µm, 195 µm, or 200 µm.

In an embodiment, the second bonding piece is an adhesive-sealant.

In an embodiment, the electrochemical device 100 further includes a third bonding piece (not shown in the drawing). At least a part of the third bonding piece is located between the third tab 41 and the housing 10, and connects the third tab 41 to the housing 10.

Along the second direction Y, the third bonding piece extends beyond two opposite sides of the third tab 41.

By setting the third bonding piece to bond the third tab 41 to the housing 10, this application favorably seals the gap between the housing 10 and the third tab 41, reduces the risk of leakage of substances out of the housing 10 or entry of external substances into the housing 10, improves the safety performance of the electrochemical device 100, and also favorably constrains and fixes the third tab 41, improves the stability of the third tab 41 connected to the housing 10, and improves the shock resistance of the electrochemical device 100.

In an embodiment, along the first direction X, a thickness of the third bonding piece is d5, satisfying: 40 µm ≤ d5 ≤ 200 µm, thereby reducing the impact caused by the third bonding piece onto the space and increasing the energy density of the electrochemical device 100 on the premise of ensuring sufficient bonding strength of the third bonding piece.

In an embodiment, the thickness d5 of the third bonding piece along the first direction X is any one of 40 µm, 45 µm, 50 µm, 55 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 145 µm, or 150 µm, 155 µm, 160 µm, 165 µm, 170 µm, 175 µm, 180 µm, 185 µm, 190 µm, 195 µm, or 200 µm.

In an embodiment, the third bonding piece is an adhesive-sealant.

In an embodiment, the electrochemical device 100 further includes a fifth bonding piece (not shown in the drawing). At least a part of the fifth bonding piece is located between the fourth tab 42 and the housing 10, and connects the fourth tab 42 to the housing 10. Along the second direction Y, the fifth bonding piece extends beyond two opposite sides of the fourth tab 42.

By setting the fifth bonding piece to bond the fourth tab 42 to the housing 10, this application favorably seals the gap between the housing 10 and the fourth tab 42, reduces the risk of leakage of substances out of the housing 10 or entry of external substances into the housing 10, improves the safety performance of the electrochemical device 100, and also favorably constrains and fixes the fourth tab 42, improves the stability of the fourth tab 42 connected to the housing 10, and improves the shock resistance of the electrochemical device 100.

In an embodiment, along the first direction X, a thickness of the fifth bonding piece is d8, satisfying: 40 µm ≤ d8 ≤ 200 µm, thereby reducing the impact caused by the fifth bonding piece onto the space and increasing the energy density of the electrochemical device 100 on the premise of ensuring sufficient bonding strength of the fifth bonding piece.

In an embodiment, the thickness d8 of the fifth bonding piece along the first direction X is any one of 40 µm, 45 µm, 50 µm, 55 µm, 60 µm, 65 µm, 70 µm, 75 µm, 80 µm, 85 µm, 90 µm, 95 µm, 100 µm, 105 µm, 110 µm, 115 µm, 120 µm, 125 µm, 130 µm, 135 µm, 140 µm, 145 µm, or 150 µm, 155 µm, 160 µm, 165 µm, 170 µm, 175 µm, 180 µm, 185 µm, 190 µm, 195 µm, or 200 µm.

In an embodiment, the fifth bonding piece is an adhesive-sealant.

In order to verify the improvement in performance of the electrochemical device 100 of this application, the following comparative tests are performed:

### Embodiment 1

The first tab is connected to the first double-side-coated region and is located at a 25% point of the total length of the first electrode plate. The second tab is connected to the first double-side-coated region and is located at a 75% point of the total length of the first electrode plate. The third tab is connected to the second double-side-coated region and is located at a 25% point of the total length of the second electrode plate. The fourth tab is connected to the second double-side-coated region and is located at a 75% point of the total length of the second electrode plate.

### Embodiment 2

The first tab is connected to the first double-side-coated region and is located at a 25% point of the total length of the first electrode plate. The second tab is connected to the first double-side-coated region and is located at a 75% point of the total length of the first electrode plate. The third tab is connected to the third blank foil region of the negative electrode and is located at a 1.5% point of the total length of the second electrode plate. The fourth tab is connected to the second double-side-coated region and is located at a 75% point of the total length of the second electrode plate.

### Embodiment 3

The first tab is connected to the first double-side-coated region and is located at a 25% point of the total length of the first electrode plate. The second tab is connected to the first double-side-coated region and is located at a 75% point of the total length of the first electrode plate. The third tab is connected to the third single-side-coated region and is located at a 6% point of the total length of the second electrode plate. The fourth tab is connected to the second double-side-coated region and is located at a 75% point of the total length of the second electrode plate.

### Embodiment 4

The first tab is connected to the first double-side-coated region and is located at a 25% point of the total length of the first electrode plate. The second tab is connected to the second single-side-coated region and is located at a 94% point of the total length of the first electrode plate. The third tab is connected to the second double-side-coated region and is located at a 25% point of the total length of the second electrode plate. The fourth tab is connected to the second double-side-coated region and is located at a 75% point of the total length of the second electrode plate.

### Embodiment 5

The first tab is connected to the first double-side-coated region and is located at a 25% point of the total length of the first electrode plate. The second tab is connected to the second single-side-coated region and is located at a 94% point of the total length of the first electrode plate. The third tab is connected to the third blank foil region and is located at a 1.5% point of the total length of the second electrode plate. The fourth tab is connected to the second double-side-coated region and is located at a 75% point of the total length of the second electrode plate.

### Embodiment 6

The first tab is connected to the first double-side-coated region and is located at a 25% point of the total length of the first electrode plate. The second tab is connected to the second single-side-coated region and is located at a 94% point of the total length of the first electrode plate. The third tab is connected to the third single-side-coated region and is located at a 6% point of the total length of the second electrode plate. The fourth tab is connected to the second double-side-coated region and is located at a 75% point of the total length of the second electrode plate.

### Embodiment 7

The first tab is connected to the first double-side-coated region and is located at a 25% point of the total length of the first electrode plate. The second tab is connected to the second single-side-coated region and is located at a 94% point of the total length of the first electrode plate. The third tab is connected to the third single-side-coated region and is located at a 6% point of the total length of the second electrode plate. No fourth tab is disposed.

### Embodiment 8

The first tab is connected to the first double-side-coated region and is located at a 25% point of the total length of the first electrode plate. The second tab is connected to the second single-side-coated region and is located at a 94% point of the total length of the first electrode plate. The third tab is connected to the second double-side-coated region and is located at a 25% or 75% point of the total length of the second electrode plate. No fourth tab is disposed.

### Embodiment 9

The first tab is connected to the first double-side-coated region and is located at a 25% point of the total length of the first electrode plate. The second tab is connected to the second single-side-coated region and is located at a 94% point of the total length of the first electrode plate. The third tab is connected to the second double-side-coated region and is located at a 50% point of the total length of the second electrode plate. No fourth tab is disposed.

### Embodiment 10

The first tab is connected to the first double-side-coated region and is located at a 25% point of the total length of the first electrode plate. The second tab is connected to the second single-side-coated region and is located at a 94% point of the total length of the first electrode plate. The third tab is connected to the third blank foil region and is located at a 1.5% point of the total length of the second electrode plate. No fourth tab is disposed.

### Embodiment 11

The first tab is connected to the first double-side-coated region and is located at a 10% point of the total length of the first electrode plate. The second tab is connected to the first double-side-coated region and is located at a 60% point of the total length of the first electrode plate. The third tab is connected to the second double-side-coated region and is located at a 25% point of the total length of the second electrode plate. No fourth tab is disposed.

### Embodiment 12

The first tab is connected to the first double-side-coated region and is located at a 15% point of the total length of the first electrode plate. The second tab is connected to the first double-side-coated region and is located at a 65% point of the total length of the first electrode plate. The third tab is connected to the second double-side-coated region and is located at a 25% point of the total length of the second electrode plate. No fourth tab is disposed.

### Embodiment 13

The first tab is connected to the first double-side-coated region and is located at a 20% point of the total length of the first electrode plate. The second tab is connected to the first double-side-coated region and is located at a 70% point of the total length of the first electrode plate. The third tab is connected to the second double-side-coated region and is located at a 25% point of the total length of the second electrode plate. No fourth tab is disposed.

### Embodiment 14

The first tab is connected to the first double-side-coated region and is located at a 25% point of the total length of the first electrode plate. The second tab is connected to the first double-side-coated region and is located at a 75% point of the total length of the first electrode plate. The third tab is connected to the second double-side-coated region and is located at a 25% point of the total length of the second electrode plate. No fourth tab is disposed.

### Embodiment 15

The first tab is connected to the first double-side-coated region and is located at a 30% point of the total length of the first electrode plate. The second tab is connected to the first double-side-coated region and is located at an 80% point of the total length of the first electrode plate. The third tab is connected to the second double-side-coated region and is located at a 25% point of the total length of the second electrode plate. No fourth tab is disposed.

### Embodiment 16

The first tab is connected to the first double-side-coated region and is located at a 35% point of the total length of the first electrode plate. The second tab is connected to the first double-side-coated region and is located at an 85% point of the total length of the first electrode plate. The third tab is connected to the second double-side-coated region and is located at a 25% point of the total length of the second electrode plate. No fourth tab is disposed.

### Embodiment 17

The first tab is connected to the first double-side-coated region and is located at a 40% point of the total length of the first electrode plate. The second tab is connected to the first double-side-coated region and is located at a 90% point of the total length of the first electrode plate. The third tab is connected to the second double-side-coated region and is located at a 25% point of the total length of the second electrode plate. No fourth tab is disposed.

### Comparative Embodiment 1

The first tab is connected to the first double-side-coated region and is located at a 50% point of the total length of the first electrode plate. No second tab is disposed. The third tab is connected to the second double-side-coated region and is located at a 50% point of the total length of the second electrode plate. No fourth tab is disposed.

### Comparative Embodiment 2

The first tab is connected to the first blank foil region and is located at a 6% point of the total length of the first electrode plate. No second tab is disposed. The third tab is connected to the second blank foil region and is located at a 94% point of the total length of the second electrode plate. No fourth tab is disposed.

Other structures of the electrochemical devices in the above embodiments and comparative embodiments are the same. 10 electrochemical devices are selected as specimens from each of the above embodiments and comparative embodiments, and are subjected to a voltage and resistance test, charging time measurement, and temperature increment monitoring.

A method for testing the voltage and resistance includes: Placing an electrochemical device steadily onto a specimen platform of a multimeter so that the test platform is automatically connected to test terminals of the multimeter, and the system automatically reads a voltage between a positive electrode and a negative electrode of the electrochemical device, and a resistance of the battery cell.

A method for measuring the charging time includes: Connecting the positive electrode and the negative electrode of the electrochemical device to a Neware battery tester, fully charging the electrochemical device until a cut-off voltage under constant-current and constant-voltage conditions, and discharging the electrochemical device at a low C-rate to collect a real capacity of the electrochemical device; setting different constant-current charging C-rate processes and constant-voltage charging cut-off conditions based on the real capacity obtained in the low C-rate discharge, so that the tester collects the values of the constant-current and constant-voltage charging capacity and charging time after the charging or discharging process begins.

A method for monitoring the temperature increment includes: Placing an electrochemical device into a paper box, placing a temperature sensing wire at the center of the surface of the electrochemical device; connecting the temperature sensing wire to a multi-channel thermometer; connecting the positive electrode and the negative electrode of the electrochemical device in the paper box to a Neware battery tester, and setting different charging processes in which the electrochemical device is charged at different C-rates; collecting the values of changed temperatures on the surface of the electrochemical device by using a multi-channel thermometer after the charging or discharging process at a specified C-rate begins, and plotting a temperature curve based on the values of changed temperatures; and using a maximum difference between an initial temperature and the changed temperatures as a temperature increment of the electrochemical device tested at this C-rate; and testing the charging temperature increment at a next C-rate after the temperature on the surface of the electrochemical device drops to the ambient temperature.

Through the above test, the test data is collected, and the measured values of each embodiment and each comparative embodiment are averaged out to obtain the following table:

**Table 1 Test results of voltage and resistance**

| Group | Voltage (V) | Resistance (mΩ) |
|---|---|---|
| Embodiment 1 | 3.834 | 7.94 |
| Embodiment 2 | 3.833 | 9.56 |
| Embodiment 3 | 3,833 | 10.58 |
| Embodiment 4 | 3.834 | 8.22 |
| Embodiment 5 | 3.833 | 10.03 |
| Embodiment 6 | 3.833 | 10.88 |
| Embodiment 7 | 3.833 | 12.02 |
| Embodiment 8 | 3.833 | 11.85 |
| Embodiment 9 | 3.833 | 10.97 |
| Embodiment 10 | 3.833 | 12.05 |
| Embodiment 11 | 3.833 | 11.96 |
| Embodiment 12 | 3.833 | 11.70 |
| Embodiment 13 | 3.833 | 11.46 |
| Embodiment 14 | 3.833 | 11.23 |
| Embodiment 15 | 3.833 | 11.47 |
| Embodiment 16 | 3.833 | 11.71 |
| Embodiment 17 | 3.833 | 11.82 |
| Comparative Embodiment 1 | 3.833 | 11.83 |
| Comparative Embodiment 2 | 3.833 | 22.05 |

**Table 2 Test results of charging time and temperature increment at a 3C charging rate**

| Group | CC (min) | CV (min) | CC + CV (min) | Temperature increment (°C) |
|---|---|---|---|---|
| Embodiment 1 | 15.56 | 29.03 | 44.59 | 37.85 |
| Embodiment 2 | 13.78 | 36.48 | 50.26 | 38.24 |
| Embodiment 3 | 13.26 | 39.12 | 52.38 | 39.23 |
| Embodiment 4 | 14.68 | 32.03 | 46.71 | 38.03 |
| Embodiment 5 | 13.54 | 37.79 | 51.33 | 38.66 |
| Embodiment 6 | 13.22 | 39.34 | 52.56 | 39.52 |
| Embodiment 7 | 11.05 | 43.10 | 54.15 | 47.76 |
| Embodiment 8 | 12.45 | 40.69 | 53.14 | 39.75 |
| Embodiment 9 | 13.11 | 39.57 | 52.68 | 39.58 |
| Embodiment 10 | 11.02 | 43.87 | 54.89 | 48.04 |
| Embodiment 11 | 11.45 | 42.23 | 53.68 | 44.35 |
| Embodiment 12 | 12.87 | 40.02 | 52.89 | 39.63 |
| Embodiment 13 | 12.93 | 39.78 | 52.71 | 39.60 |
| Embodiment 14 | 13.10 | 39.52 | 52.62 | 39.57 |
| Embodiment 15 | 12.94 | 39.79 | 52.73 | 39.61 |
| Embodiment 16 | 12.86 | 40.04 | 52.90 | 39.63 |
| Embodiment 17 | 12.53 | 40.52 | 53.05 | 39.68 |
| Comparative Embodiment 1 | 12.06 | 41.37 | 53.42 | 39.90 |
| Comparative Embodiment 2 | 8.22 | 59.91 | 65.13 | 56.41 |

**Table 3 Test results of charging time and temperature increment at a 4C charging rate**

| Group | CC (min) | CV (min) | CC + CV (min) | Temperature increment (°C) |
|---|---|---|---|---|
| Embodiment 1 | 10.94 | 27.95 | 38.89 | 43.88 |
| Embodiment 2 | 9.78 | 35.28 | 45.06 | 44.55 |
| Embodiment 3 | 9.26 | 37.82 | 47.08 | 45.26 |
| Embodiment 4 | 10.68 | 30.03 | 40.71 | 44.18 |
| Embodiment 5 | 9.54 | 36.59 | 46.13 | 44.89 |
| Embodiment 6 | 9.22 | 38.04 | 47.26 | 45.92 |
| Embodiment 7 | 7.55 | 42.86 | 50.41 | 53.22 |
| Embodiment 8 | 8.03 | 40.53 | 48.56 | 46.30 |
| Embodiment 9 | 9.01 | 38.87 | 47.88 | 46.05 |
| Embodiment 10 | 7.49 | 43.29 | 50.78 | 53.78 |
| Embodiment 11 | 7.66 | 41.90 | 49.66 | 48.57 |
| Embodiment 12 | 8.33 | 40.01 | 48.34 | 46.17 |
| Embodiment 13 | 8.56 | 39.47 | 48.03 | 40.06 |
| Embodiment 14 | 9.01 | 38.55 | 47.56 | 35.99 |
| Embodiment 15 | 8.57 | 39.48 | 48.05 | 40.07 |
| Embodiment 16 | 8.32 | 40.03 | 48.35 | 46.18 |
| Embodiment 17 | 8.14 | 40.30 | 48.46 | 46.22 |
| Comparative Embodiment 1 | 7.78 | 41.59 | 49.37 | 46.45 |
| Comparative Embodiment 2 | 3.21 | 49.98 | 63.19 | 59.25 |

**Table 4 Test results of charging time and temperature increment at a 5C charging rate**

| Group | CC (min) | CV (min) | CC + CV (min) | Temperature increment (°C) |
|---|---|---|---|---|
| Embodiment 1 | 8.17 | 27.21 | 35.38 | 49.53 |
| Embodiment 2 | 6.28 | 34.98 | 41.26 | 50.24 |
| Embodiment 3 | 5.76 | 37.62 | 43.38 | 51.23 |
| Embodiment 4 | 7.18 | 30.53 | 37.71 | 50.03 |
| Embodiment 5 | 6.04 | 36.29 | 42.33 | 50.66 |
| Embodiment 6 | 5.72 | 37.84 | 43.56 | 51.52 |
| Embodiment 7 | 3.55 | 45.56 | 49.11 | 55.28 |
| Embodiment 8 | 4.35 | 42.60 | 46.95 | 52.22 |
| Embodiment 9 | 5.48 | 38.88 | 44.36 | 51.90 |
| Embodiment 10 | 3.23 | 46.64 | 49.87 | 55.61 |
| Embodiment 11 | 3.68 | 44.51 | 48.19 | 55.02 |
| Embodiment 12 | 4.68 | 41.55 | 46.23 | 51.98 |
| Embodiment 13 | 4.99 | 40.34 | 45.33 | 51.78 |
| Embodiment 14 | 5.33 | 38.96 | 44.29 | 51.63 |
| Embodiment 15 | 4.98 | 40.38 | 45.36 | 51.80 |
| Embodiment 16 | 4.69 | 41.57 | 46.26 | 52.00 |
| Embodiment 17 | 4.03 | 41.98 | 46.01 | 52.07 |
| Comparative Embodiment 1 | 3.78 | 44.01 | 47.79 | 52.40 |
| Comparative Embodiment 2 | 1.08 | 61.47 | 62.55 | 65.46 |

In the tables above, CC represents constant current charging, and CV represents constant voltage charging.

As can be seen from Table 1 to Table 4, the electrochemical device of this application is conducive to shortening the charging time, reducing the charging temperature increment, and improving the safety performance of the electrochemical device.

In summary, in the electrochemical device 100 of this application, the first tab 31 and the second tab 32 are set to be of the same polarity, the first tab 31 is connected to the first electrode plate at a 10% to 60% point of the total length of the first electrode plate 21, and the second tab 32 is connected to the first electrode plate at a 60% to 100% point of the total length of the first electrode plate 21, thereby shortening the charging or discharging time of the electrochemical device 100, and reducing the temperature increment in a charging or discharging process. In addition, the protruding part of the second tab 32 out of the housing 10 is connected to the protruding part of the first tab 31 out of the housing 10, and the projection of the protruding part of the first tab 31 out of the housing 10 overlaps the projection of the protruding part of the second tab 32 out of the housing 10 along the first direction X, so that the first tab 31 and the second tab 32 support each other to reinforce each other, thereby improving the bending resistance of the first tab 31 and the second tab 32, reducing the risk of breakage of the first tab 31 and/or the second tab 32, and improving the shock resistance of the electrochemical device 100.

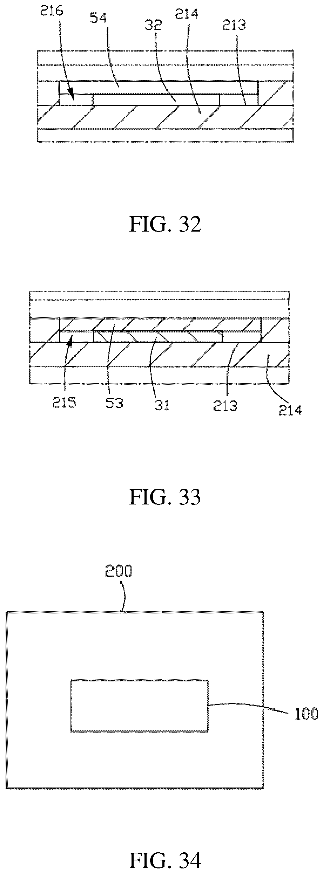

As shown in FIG. 34, an embodiment of this application further provides an electrical device 200. The electrical device includes the electrochemical device 100 disclosed in any one of the preceding embodiments.

In the above electrical device 200, the first tab 31 and the second tab 32 of the same polarity are disposed in the electrochemical device 100, the first tab 31 is connected to the first electrode plate at a 10% to 60% point of the total length of the first electrode plate 21, and the second tab 32 is connected to the first electrode plate at a 60% to 100% point of the total length of the first electrode plate 21, thereby shortening the charging or discharging time of the electrochemical device 100, reducing the temperature increment in a charging or discharging process, and reducing the impact caused by the charging or discharging time and the temperature increment of the electrochemical device 100 onto the electrical device 200. In addition, the protruding part of the second tab 32 out of the housing 10 is connected to the protruding part of the first tab 31 out of the housing 10, and the projection of the protruding part of the first tab 31 out of the housing 10 overlaps the projection of the protruding part of the second tab 32 out of the housing 10 along the first direction X, so that the first tab 31 and the second tab 32 support each other, thereby improving the bending resistance of the first tab 31 and the second tab 32, reducing the risk of breakage of the first tab 31 and/or the second tab 32, improving the shock resistance of the electrochemical device 100, and reducing the impact caused by the wobbling of the electrochemical device 100 onto the electrical device 200.

In an embodiment, the electrical devices 200 include, but are not limited to, an unmanned aerial vehicle, an electric vehicle, an electric two-wheeler, a 3C electronic device, a home appliance, or the like.

Described above are merely specific embodiments of this application. However, the protection scope of this application is not limited to such embodiments. Any variations or replacements made within the technical scope disclosed herein still fall within the disclosure scope of this application.

## Claims

1. An electrochemical device (100), comprising :
a housing (10);
an electrode assembly (20), disposed in the housing (10), wherein the electrode assembly (20) comprises a first electrode plate (21), a second electrode plate (22), and a separator (23); the separator (23) is disposed between the first electrode plate (21) and the second electrode plate (22); and the first electrode plate (21), the separator (23), and the second electrode plate (22) are wound together;
a first tab (31), connected to the first electrode plate (21), and partially protruding out of the housing (10);
a second tab (32), connected to the first electrode plate (21) and the first tab (31), and partially protruding out of the housing (10);
a third tab (41), connected to the second electrode plate (22), and partially protruding out of the housing (10);
along a first direction (X), a projection of part of the first tab (31) protruding out of the housing (10) overlaps a projection of a part of the second tab (32) protruding out of the housing (10), and the first direction (X) is a thickness direction of the electrode assembly (20); and
along a winding direction of the electrode assembly (20), the first electrode plate (21) comprises a first leading end (211) and a first trailing end (212); by starting from the first leading end (211), the first tab (31) is connected to the first electrode plate (21) at a 10% to 60% point of a total length of the first electrode plate (21), and the second tab (32) is connected to the first electrode plate (21) at a 60% to 100% point of the total length of the first electrode plate (21).

2. The electrochemical device (100) according to claim 1, wherein, by starting from the first leading end (211), the first tab (31) is connected to the first electrode plate (21) at a 25% to 50% point of the total length of the first electrode plate (21), and/or, the second tab (32) is connected to the first electrode plate (21) at a 70% to 90% point of the total length of the first electrode plate (21).

3. The electrochemical device (100) according to claim 1, wherein
the first electrode plate (21) is a positive electrode plate, the first tab (31) and the second tab (32) are positive tabs, the second electrode plate (22) is a negative electrode plate, and the third tab (41) is a negative tab.

4. The electrochemical device (100) according to claim 1, wherein,
the first electrode plate (21) is a negative electrode plate, the first tab (31) and the second tab (32) are negative tabs, the second electrode plate (22) is a positive electrode plate, and the third tab (41) is a positive tab.

5. The electrochemical device (100) according to claim 1, wherein,
a thickness of the first tab (31) is d1, 40 µm ≤ d1 ≤ 150 µm; and/or
a thickness of the second tab (32) is d2, 40 µm ≤ d2 ≤ 150 µm.

6. The electrochemical device (100) according to claim 1, further comprising:
a first bonding piece, wherein at least a part of the first bonding piece is located between the first tab (31) and the housing (10), and the first bonding piece connects the first tab (31) and the housing (10);
a second bonding piece, wherein at least a part of the second bonding piece is located between the second tab (32) and the housing (10), and the second bonding piece connects the second tab (32) and the housing (10); and
along a second direction (Y) perpendicular to the first direction (X), the first bonding piece extends beyond two opposite sides of the first tab (31), and the second bonding piece extends beyond two opposite sides of the second tab (32).

7. The electrochemical device (100) according to claim 6, wherein,
along the first direction (X), a thickness of the first bonding piece is d3, 40 µm ≤ d3 ≤ 200 µm; and/or
along the first direction (X), a thickness of the second bonding piece is d4, 40 µm ≤ d4 ≤ 200 µm.

8. The electrochemical device (100) according to claim 1, further comprising a fourth bonding piece (51), at least a part of the fourth bonding piece (51) is located between the first tab (31) and the second tab (32), and the fourth boding piece connects the first tab (31) and the second tab (32).

9. The electrochemical device (100) according to claim 8, wherein, the fourth bonding piece (51) is double-sided tape.

10. The electrochemical device (100) according to claim 6, wherein,
the first tab (31) comprises a first part; along the first direction (X), a projection of the first part does not overlap a projection of the second tab (32), the projection of the first part and the projection of the second tab (32) are arranged along the second direction (Y), a length of the first part along the second direction (Y) is d6, and d6 ≤ 0.2 mm.

11. The electrochemical device (100) according to claim 1, wherein,
the first electrode plate (21) comprises a first current collector (213) and a first active layer (214), and the first active layer (214) is disposed on a surface of the first current collector (213);
a first recess (215) is provided on the first electrode plate (21), a bottom of the first recess (215) is the first current collector (213), a periphery of the first recess (215) is the first active layer (214), and at least a part of the first tab (31) is disposed in the first recess (215) and connected to the first current collector (213); and/or
a second recess (216) is provided on the first electrode plate (21), a bottom of the second recess (216) is the first current collector (213), a periphery of the second recess (216) is the first active layer (214), and at least a part of the second tab (32) is disposed in the second recess (216) and connected to the first current collector (213).

12. The electrochemical device (100) according to claim 1, wherein,
the first electrode plate (21) comprises a first current collector (213) and a first active layer (214); the first current collector (213) comprises a first coated region (2131), a first blank foil region (2132), and a second blank foil region (2133); at least a part of the first blank foil region (2132) is located at the first leading end (211); at least a part of the second blank foil region (2133) is located at the first trailing end (212); the first active layer (214) is disposed in the first coated region (2131); the first blank foil region (2132) is exposed without the first active layer (214); and the second blank foil region (2133) is exposed without the first active layer (214); and
the first tab (31) is connected to the first blank foil region (2132) or the first coated region (2131), and/or, the second tab (32) is connected to the second blank foil region (2133) or the first coated region (2131).

13. The electrochemical device (100) according to claim 1, wherein,
the first electrode plate (21) comprises a first current collector (213) and a first active layer (214); the first current collector (213) comprises a first coated region (2131), a first blank foil region (2132), and a second blank foil region (2133); at least a part of the first blank foil region (2132) is located at the first leading end (211); at least a part of the second blank foil region (2133) is located at the first trailing end (212); the first active layer (214) is disposed in the first coated region (2131); the first blank foil region (2132) is exposed without the first active layer (214); and the second blank foil region (2133) is exposed without the first active layer (214); and
the first coated region (2131) comprises a first single-side-coated region (21311), a second single-side-coated region (21312), and a first single-side-coated region (21313); the first single-side-coated region (21313) is adjacent the first single-side-coated region (21311) and the second single-side-coated region (21312); the first single-side-coated region (21311) is adjacent to the first blank foil region (2132); and the second single-side-coated region (21312) is adjacent to the second blank foil region (2133);
along a thickness direction of the first electrode plate (21), one side of the first single-side-coated region (21311) is coated with the first active layer (214), one side of the second single-side-coated region (21312) is coated with the first active layer (214), and both sides of the first single-side-coated region (21313) are coated with the first active layer (214); and
the first tab (31) is connected to the first single-side-coated region (21311) or the first single-side-coated region (21313), and/or, the second tab (32) is connected to the second single-side-coated region (21312) or the first single-side-coated region (21313).

14. The electrochemical device (100) according to any one of claims 1 to 13, further comprising a fourth tab (42), the fourth tab (42) is connected to the second electrode plate (22) and partially protrudes out of the housing (10), and a part of the fourth tab (42) protruding out of the housing (10) is connected to a part of the third tab (41) protruding out of the housing (10).
along the first direction (X), a projection of the part of the third tab (41) protruding out of the housing (10) overlaps a projection of the part of the fourth tab (42) protruding out of the housing (10); and
along the winding direction of the electrode assembly (20), the second electrode plate (22) comprises a second leading end (225) and a second trailing end (226);by starting from the second leading end (225), the third tab (41) is connected to the second electrode plate (22) at a 10% to 60% point of a total length of the second electrode plate (22), and the fourth tab (42) is connected to the second electrode plate (22) at a 60% to 100% point of the total length of the second electrode plate (22).

15. The electrochemical device (100) according to claim 14, wherein, by starting from the second leading end (225), the third tab (41) is connected to the second electrode plate (22) at a 25% to 50% point of the total length of the second electrode plate (22), and/or, the fourth tab (42) is connected to the second electrode plate (22) at a 70% to 90% point of the total length of the second electrode plate (22).

16. An electrical device, comprising the electrochemical device (100) according to any one of claims 1 to 15.
